# EUROPÄISCHE PATENTSCHRIFT

(11) **EP 3 300 521 B1**
(45) Veröffentlichungstag und Bekanntmachung des Hinweises auf die Patenterteilung: **04.12.2019**
(21) Anmeldenummer: 16747740.5
(22) Anmeldetag: 11.07.2016
(51) Int. Cl.: G05B 19/4068, G05B 19/408

(54) **AUSRICHTUNGSVERFAHREN FÜR WERKSTÜCKE**
ALIGNMENT METHOD FOR WORKPIECES
PROCEDE D'ALIGNEMENT POUR PIECES

(30) Priorität: 27.07.2015 EP 15178412
(43) Veröffentlichungstag der Anmeldung: 04.04.2018
(73) Patentinhaber: Siemens Aktiengesellschaft, 80333 München (DE)
(72) Erfinder: PITZ, Thomas, 71277 Rutesheim (DE); SPIELMANN, Ralf, 70569 Stuttgart (DE)
(86) Internationale Anmeldenummer: PCT/EP2016/066380
(87) Internationale Veröffentlichungsnummer: WO 2017/016855

(56) Entgegenhaltungen:
- DE-A1-102012 201 732
- US-A1- 2012 078 406
- US-A1- 2012 123 600

## Beschreibung

Die Erfindung betrifft ein Verfahren zur Ausrichtung eines Werkstücks, sowie ein dazu geeignetes Programm, eine geeignete Steuereinheit, und eine entsprechende Produktionsmaschine. Es ist eine Vielzahl an Bearbeitungsverfahren für Werkstücke bekannt, bei denen ein NC- oder CNC-gesteuertes Werkzeug oder Werkzeugersatz, beispielsweise eine Laser-Punkt oder eine Druckerspitze, relativ zum Werkstück auf einer Bahn entlang geführt wird. Dabei ist das Werkzeug und/oder das Werkstück entlang seiner Hauptachsausrichtungen durch eine Mehrzahl an Antriebsmitteln angetrieben, deren Aufbau die erzielbare Bearbeitungsleistung bestimmen. Es ist ferner bekannt, dass durch eine modifizierte räumliche Ausrichtung eines zu bearbeitenden Werkstücks bezüglich zur Ausrichtung der Hauptachsen bei der Bearbeitung eine Zeitersparnis erzielt werden kann. Hierzu wird beispielsweise das Werkstück um einen bestimmten Winkel gedreht eingespannt. Der entsprechende Winkel wird hierbei durch manuelles Ausprobieren durch einen Benutzer ermittelt.

Es besteht ein Nachteil darin, dass eine derartige experimentelle Ermittlung zeitaufwändig ist. Hierdurch wird häufig nicht das theoretisch erreichbare Maximum an Zeitersparnis erzielt. Insgesamt besteht Bedarf an einer Lösung, die einem Benutzer ohne experimentellen Aufwand eine optimierte Ausrichtung eines Werkstücks ermittelt.

Die Offenlegungsschrift: DE 10 2012 201 732 A1, "Numerisch gesteuerte Werkzeugmaschine und Verfahren zum Steuern eines automatischen rotatorischen Ausrichtvorgangs eines Zahnrads an der Werkzeugmaschine" beschreibt, dass es bekannt ist durch eine modifizierte räumliche Ausrichtung eines zu bearbeitenden Werkstücks bezüglich zur Ausrichtung der Hauptachsen bei der Bearbeitung eine Zeitersparnis zu erzielen. Weiter ist angegeben, dass hierzu das Werkstück in einen bestimmten Winkel gedreht wird und dieser Winkel durch manuelles Ausprobieren durch den Benutzer ermittelt wird. Der Erfindung liegt die Aufgabe zugrunde, ein Verfahren bereitzustellen, das die Nachteile aus dem Stand der Technik überwindet und in einfacher Form in eine bestehende Produktionsmaschine implementiert werden kann.

Die Aufgabe wird durch das erfindungsgemäße Verfahren gelöst, bei dem eine angestrebte Ausrichtung eines Werkstücks ermittelt wird, das einer Bearbeitung zu unterziehen ist. Dabei wird in einem ersten Schritt von einer Steuereinheit einer Produktionsmaschine ein werkstückfester Bearbeitungspfad bereitgestellt, den ein Werkzeug der Produktionsmaschine zur Anfertigung des angestrebten Produkts abzufahren hat. Der werkstückfeste Bearbeitungspfad ist hierbei auf einen Werkstückbezugspunkt bezogen und in einem zugehörigen Werkstückachsensystem definiert. Insgesamt ist der werkstückfeste Bearbeitungspfad damit in einem körperfesten Bezugssystem definiert. In einem weiteren Verfahrensschritt wird eine starre Transformation der Positionierung des Werkstücks ausgewählt. Unter der starren Transformation ist hierbei die Lage des Werkstückbezugspunktes relativ zum Produktionsmaschinenbezugspunkt im zugehörigen Werkzeugachsensystem zu verstehen. Die starre Transformation umfasst ferner die Ausrichtung des Werkstückachsensystems im Produktionsmaschinenachsensystem. Das Auswählen der starren Transformation erfolgt durch ein Programm, das in der Steuereinheit der Werkzeugsteuermaschine ausgeführt wird. In einem anschließenden Verfahrensschritt wird das Abfahren des werkstückfesten Bearbeitungspfades unter Berücksichtigung der starren Transformation der Werkstückpositionierung durchgeführt. Bei der Simulation wird mindestens ein zugehöriger Steuerbefehl für mindestens ein Antriebsmittel der Produktionsmaschine berechnet und gespeichert. In einem anschließenden Verfahrensschritt wird der ermittelte mindestens eine Steuerbefehl ausgewertet, so dass eine zeitlich aufgelöste Beanspruchung der Antriebsmittel der Produktionsmaschine erkennbar ist. Auf Basis dessen wird mindestens eine Prozessgröße ermittelt, die das Abfahren des werkstückfesten Bearbeitungspfades bei der Bearbeitung charakterisiert.

Erfindungsgemäß werden die beschriebenen Schritte unter Modifizieren der starren Transformation der Werkstückpositionierung wiederholt und dabei jeweils die zugehörige Prozessgröße ermittelt. Das Wiederholen der Verfahrensschritte erfolgt solange, bis die mindestens eine Prozessgröße einen angestrebten Zielwert erreicht.

Das erfindungsgemäße Verfahren erlaubt es, in kurzer Zeit eine Vielzahl an Ausrichtungen des Werkstücks auszuwerten und eine geeignete Ausrichtung auszuwählen. Die auszuwertende Prozessgröße kann dabei durch den Benutzer gewählt werden, so dass eine Optimierung auf eine Vielzahl von Aspekten möglich ist. Ferner nutzt das erfindungsgemäße Verfahren mit dem Bearbeitungspfad eine zur Verarbeitung des Werkstücks notwendige Information, die ohnehin vorliegt. Darüber hinaus erfolgt die Simulation des mit der starren Transformation beaufschlagten Bearbeitungspfades in einem Softwaremodul, das in einer Steuereinheit einer modernen Produktionsmaschine ohnehin vorhanden ist.

Der Erfindung liegt dabei die überraschende Erkenntnis zugrunde, dass bereits mit einer geringen Anzahl an Simulationsdurchläufen eine der angestrebten Prozessgröße zuträgliche Ausrichtung ermittelt wird. Die geringe Anzahl an Simulationsdurchläufen erlaubt es, das beanspruchte Verfahren auch auf einfacher Hardware mit geringer Rechenleistung umzusetzen. Infolgedessen kann das erfindungsgemäße Verfahren in einfacher und kostengünstiger Weise verwirklicht werden. Erfindungsgemäß ist die mindestens eine Prozessgröße ein Verhältnis von Betriebsdauern der Antriebsmittel von mindestens zwei Werkzeugbewegungsachsen.

In einer bevorzugten Ausführungsform der Erfindung umfasst die starre Transformation als Parameter einen translatorischen Versatz und/oder einen Ausrichtungswinkel des Werkstücks. Der translatorische Versatz ist dabei die Position des Werkstückbezugspunktes relativ zum Maschinenbezugspunkt in dessen Maschinenachsensystem. Der Ausrichtungswinkel beschreibt, unter welchem Winkel sich Achsen des Werkstückachsensystems und des Maschinenachsensystems schneiden. Bei einer parallelen Ausrichtung der beiden Achsensysteme nehmen alle Ausrichtungswinkel den Wert Null Grad an. Gleichermaßen ist der translatorische Versatz Null, wenn der Werkstückbezugspunkt in den Maschinenbezugspunkt fällt. Eine Darstellung der starren Transformation als eine Kombination aus einem translatorischen Versatz und mindestens einen Ausrichtungswinkel erlaubt eine kompakte Darstellung der starren Transformation, so dass das erfindungsgemäße Verfahren schnell durchgeführt werden kann. Die Parameter spiegeln wieder, in welcher Ausrichtung das Werkstück für die Bearbeitung einzuspannen ist. Durch eine Auswahl bzw. Einschränkung der zu modifizierenden und simulierenden Ausrichtungswinkel können die bei der Einspannung verwirklichbaren technischen Möglichkeiten abgebildet werden. Infolgedessen kann das erfindungsgemäße Verfahren auf Werkstückpositionierungen beschränkt werden, die in einfacher Weise realisierbar sind. Hierdurch wird die Effizienz des beanspruchten Verfahrens weiter gesteigert.

In einer besonders bevorzugten Ausführungsform der Erfindung ist das Verhältnis der Betriebsdauern der Antriebsmittel der mindestens zwei Maschinenachsen im Wesentlichen gleich Eins. Damit bildet das Verhältnis der Betriebsdauern der beiden Antriebsmittel die Gleichmäßigkeit des Verschleißes an. Hierdurch erlaubt das erfindungsgemäße Verfahren, durch Auswahl einer entsprechenden Werkstückpositionierung dessen Bearbeitung an die Robustheit der einzelnen Antriebsmittel der Produktionsmaschine anzupassen. Hierdurch werden die Ausfallzeiten an der Produktionsmaschine minimiert, und die Wirtschaftlichkeit der spanenden Verarbeitung des Werkstücks gesteigert. Je gleichmäßiger der Verschleiß an den Antriebsmitteln der Produktionsmaschine auftritt, umso geringer werden dabei die Ausfallzeiten.

Befinden sich bei einer Bearbeitung, beispielsweise mit einem Fräser, zwei Antriebsmittel der Produktionsmaschine gleichzeitig im Eingriff, können die Antriebskräfte beider Antriebsmittel gleichzeitig auf das Werkzeug aufgebracht werden. Durch das gleichzeitige Aufbringen mehrerer Antriebskräfte ist eine erhöhte Bearbeitungsgeschwindigkeit, beispielsweise eine erhöhte Schnittgeschwindigkeit, erzielbar. Die durch Kombination zweier Antriebsmittel erzielbare Bearbeitungsgeschwindigkeit ist höher als die mit nur einem Antriebsmittel erzielbare Bearbeitungsgeschwindigkeit. Alternativ oder ergänzend kann durch eine solche Kombination von mehreren Antriebskräften auch eine Energieersparnis oder Verschleißminderung erreicht werden. Das erfindungsgemäße Verfahren erlaubt es damit, das Leistungspotential einer Produktionsmaschine stärker auszuschöpfen und die Wirtschaftlichkeit der Bearbeitung des Werkstücks weiter zu erhöhen.

In der Ausführungsform der Erfindung ist der Zielwert, auf den mindestens eine Prozessgröße optimiert wird, ein wählbarer Wert. Hierdurch ist das erfindungsgemäße Verfahren in einfacher Weise an eine Vielzahl an Prozessgrößen anpassbar. Beispielsweise kann auch eine minimale Zeitdauer für die Bearbeitung des Werkstücks, ein minimaler Energieverbrauch, oder eine maximale Bearbeitungsgeschwindigkeit des Werkzeugs angestrebt werden. Infolgedessen ist das beanspruchte Verfahren an eine Vielzahl von Einsatzbereichen anpassbar.

In einer weiteren Ausführungsform der Erfindung werden die oben beschriebenen Verfahrensschritte für mindestens einen wählbaren Parameter der starren Transformation mindestens dreimal iterativ durchgeführt. Dabei wird der mögliche Wertebereich des wählbaren Parameters in mindestens zwei Intervalle eingeteilt. Auch bei einer Kombination von mehreren wählbaren Parametern bleibt die Anzahl der erforderlichen Simulationsdurchgänge gering. Gleichermaßen ist die Anzahl der ermittelten Werte für die Prozessgröße gering, so dass mit wenig Rechenaufwand darin ein Maximum, ein Minimum oder ein gewählter Zielwert identifiziert werden kann. So kann beispielsweise eine Optimierung anhand von zwei Parametern der starren Transformation durch sechs Simulationen von werkstückfesten Bearbeitungspfaden und jeweils anschließender Ermittlung der mindestens einen Prozessgröße erfolgen, wenn beide Parameter nacheinander separat modifiziert werden. Ferner kann eine Optimierung anhand von zwei Parametern mit neun Simulationen von werkstückfesten Bearbeitungspfaden und Ermittlungen der mindestens einen Prozessgröße durchgeführt werden, wenn jeder Parameterwert des ersten Parameters der starren Transformation mit allen Parameterwerten des zweiten Parameters der starren Transformation zu kombinieren ist. Hierdurch wird der erforderliche Rechenaufwand und die Anforderungen an die dazu eingesetzte Hardware durch das erfindungsgemäße Verfahren ohne Einbuße an Präzision weiter verringert.

In einer weiteren Ausführungsform des erfindungsgemäßen Verfahrens ist der Zielwert ein Resultat einer nichtlinearen Optimierung, eines Newton-Verfahrens oder ist ein Optimum eines Least-Square-Polynoms.

Besonders bevorzugt dienen die bei jeder Modifikation der starren Transformation errechneten Prozessgrößen als Stützstellen für die nichtlineare Optimierung, das Newton-Verfahren oder das Least-Square-Polynom. Bei diesen Rechenverfahren wird im Wesentlichen eine mathematisch beschriebene Kurve oder Fläche durch die Stützstellen gelegt. Solche Kurven oder Flächen sind mathematisch mit geringem Rechenaufwand analytisch auswertbar, so dass in einfacher Weise ein Maximum, ein Minimum oder ein Wertebereich ermittelbar ist. Insbesondere sind Maxima, Minima oder Zielbereiche, die zwischen den Stützstellen liegen, identifizierbar. Eine derartige Auswahl eines zwischen den Stützstellen liegenden Zielwertes erlauben es, den Zeitbedarf für die Bearbeitung oder deren Energiebedarf weiter zu senken. Die Rechenverfahren können ohne Weiteres auch zur Ermittlung eines Optimums in Abhängigkeit einer Vielzahl von Parametern der starren Transformation ermittelt werden. Infolge dessen kann eine Anzahl an Ausrichtungen des Werkstücks in der Einspannung ausgewertet werden, die für eine experimentelle Ermittlung einer optimierten Werkstückpositionierung unpraktikabel hoch ist. Beispielsweise kann infolge einer um mehrere Raumachsen gedrehten Ausrichtung des Werkstücks eine Überlagerung von Antriebsmitteln von drei oder mehr Werkzeugachsen erzielt werden, was zu einer erhöhten Bearbeitungsgeschwindigkeit führt. Die nichtlineare Optimierung, das Newton-Verfahren und das Least-Square-Polynom erlauben damit, die technischen Kapazitäten der Produktionsmaschine weiter auszuschöpfen und die Effizienz der Werkstückbearbeitung weiter zu steigern. Dabei basiert das erfindungsgemäße Verfahren auf einer niedrigen Anzahl an Iterationsschritten und bedient sich einfacher mathematischer Auswertungsmethoden, die auch mit einfacher Hardware umsetzbar sind.

In einer weiteren besonders bevorzugten Ausführungsform der Erfindung wird bei einem ersten Durchlauf ein erster Parameter der starren Transformation modifiziert. Wenn beim ersten Durchlauf die Differenzen der Werte der mindestens einen Prozessgröße zu ihrem Zielwert einen Schwellenwert übersteigen, wird dies als ein Stillstand der angestrebten Optimierung identifiziert. Anschließend wird in einem anschließenden zweiten Durchlauf ein zweiter Parameter der starren Transformation modifiziert und anhand von Differenzen der ermittelten Werte der mindestens einen Prozessgröße eine Annäherung an den Zielwert bzw. ein weiterer Stillstand der angestrebten Optimierung identifiziert. Zusätzlich können in weiteren Durchläufen weitere Parameter der starren Transformation modifiziert werden. Beispielsweise kann als erster Parameter die Drehung des Werkstücks um eine Achse senkrecht zu einem Werkstücktisch verändert werden. Ein derartiges Drehen und Einspannen des Werkstücks in der Werkstücktischebene kann mit einfachen Mitteln umgesetzt werden. Besonders bevorzugt ist der erste Parameter der starren Transformation, der im ersten Durchlauf modifiziert wird, die geometrische Größe, die durch ein Spannzeug am Werkstücktisch am einfachsten umgesetzt werden kann. Der erste Parameter ist besonders bevorzugt ein Drehwinkel um eine Werkstückachse, die im Wesentlichen senkrecht zur Ebene des Werkstücktischs steht. Wenn beim ersten Durchlauf der angestrebte Zielwert nicht erreicht wird, oder zumindest keine Annäherung daran erfolgt, werden im zweiten Durchlauf durch Modifizieren des zweiten Parameters Ausrichtungen des Werkstücks ausgewertet, die ein aufwändigeres Spannzeug erfordern. Je mehr Parameter der starren Transformation für eine optimale Werkstückpositionierung anzupassen sind, umso höher sind die Anforderungen an das erforderliche Spannzeug. Das erfindungsgemäße Verfahren verwirklicht durch das sukzessive Modifizieren einzelner Parameter der starren Transformation das Prinzip einer stufenweisen Parameter-Variation. Die Reihenfolge, welcher Parameter der starren Transformation im ersten, im zweiten, dritten, usw. Durchlauf modifiziert wird, ist durch den Benutzer auswählbar. Infolge dessen kann der Benutzer das erfindungsgemäße Verfahren daran anpassen, welcher Aufwand im vorliegenden Bearbeitungsverfahren für ein Spannzeug gerechtfertigt ist. Das erfindungsgemäße Verfahren ist folglich in einfacher Weise an eine Vielzahl von Anwendungsfällen anpassbar und dadurch in besonderem Maße wirtschaftlich.

In einer weiteren Ausführungsform der Erfindung wird im Verfahrensschritt, in dem der werkstückfeste Bearbeitungspfad unter Berücksichtigung der starren Transformation der Werkstückposition erfolgt, mindestens eine Randbedingung der Produktionsmaschine berücksichtigt. Die Randbedingung der Produktionsmaschine kann dabei eine maximale Fahrlänge, eine maximale Beschleunigung, ein maximaler Ruck und/oder eine maximale Bearbeitungsgeschwindigkeit des Werkzeugs bzw. Werkstücks entlang mindestens einer Werkzeugachse oder Werkstückachse sein. Wird dabei eine Verletzung einer solchen Randbedingung erkannt, wird die korrespondierende starre Transformation für die weitere Durchführung des erfindungsgemäßen Verfahrens verworfen.

Die der Erfindung zugrunde liegende Aufgabe wird ferner durch ein Programm gelöst, das in einem Speicher einer Steuereinheit einer Produktionsmaschine speicherbar ist, und durch ein Rechenwerk in der Steuereinheit ausführbar ist. Das erfindungsgemäße Programm ist dazu ausgebildet, Steuerbefehle an Antriebsmittel von Werkzeugachsen der Produktionsmaschine auszugeben. Erfindungsgemäß ist das Programm ferner dazu geeignet, mindestens eines der oben stehenden Verfahren durchzuführen. Das erfindungsgemäße Programm basiert dabei auf Softwarekomponenten, wie beispielsweise einem Simulationsmodul, die in einer Steuereinheit einer Produktionsmaschine ohnehin vorhanden sind, und erfordert selbst nur geringe Rechenleistung. Infolgedessen kann eine Produktionsmaschine in einfacher Weise mit dem erfindungsgemäßen Programm nachgerüstet werden. Das Programm ist damit für eine weite Spanne an Einsatzzwecken geeignet und erlaubt eine preiswerte leistungssteigernde Modifikation vorhandener Produktionsmaschinen.

Die der Erfindung zugrundeliegende Aufgabe wird auch durch eine Steuereinheit gelöst, die dazu geeignet ist, mindestens ein Antriebsmittel einer Produktionsmaschine zu steuern. Die Steuereinheit weist dazu einen Speicher und eine Recheneinheit zur Ausführung eines Programms auf. Das Programm ist dazu ausgebildet, mindestens eines der oben stehenden erfindungsgemäßen Verfahren durchzuführen

Gleichermaßen wird die der Erfindung zugrundeliegende Aufgabenstellung durch eine Produktionsmaschine gelöst, die ein Werkzeug umfasst, das durch jeweils mindestens ein Antriebsmittel entlang mindestens zweier Werkzeugachsen oder Werkstückachsen bewegbar ist. Ferner umfasst die Produktionsmaschine eine Steuereinheit mit einem Speicher, auf dem das oben beschriebene erfindungsgemäße Programm gespeichert und ausgeführt werden kann. Die erfindungsgemäße Produktionsmaschine ist dazu geeignet, eine Bearbeitung eines Werkstücks mit einem Minimum an Zeitbedarf, einem Minimum an Energiebedarf und/oder einem Minimum an Verschleiß an den Antriebsmitteln durchzuführen.

Die Erfindung wird im Folgenden anhand einzelner Ausführungsformen in den Figuren näher beschrieben: Es zeigt:
- FIG 1: eine Werkstückbearbeitung nach dem Stand der Technik;
- FIG 2: eine Werkstückbearbeitung mit einer Werkstückpositionierung aus einer ersten Ausführungsform des erfindungsgemäßen Verfahrens;
- FIG 3: ein Diagramm einer Prozessgrößenauswertung gemäß einer zweiten Ausführungsform der Erfindung;
- FIG 4: eine Prozessgrößenauswertung gemäß einer dritten Ausführungsform des erfindungsgemäßen Verfahrens;
- FIG 5: schematisch ein Ablaufdiagramm einer vierten Ausführungsform des erfindungsgemäßen Verfahrens.

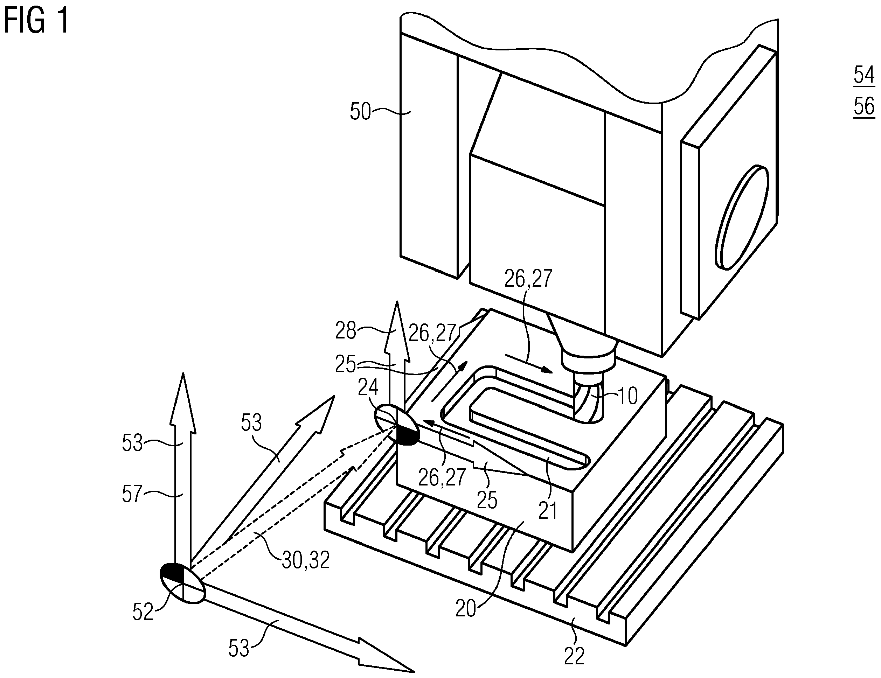

In FIG 1 ist schematisch ein Werkstück 20 abgebildet, dass zu einer spanenden Bearbeitung durch ein Werkzeug 10 einer Produktionsmaschine 50 auf einem Werkstücktisch 22 positioniert ist. Im Rahmen der spanenden Überarbeitung wird an einer Fläche des Werkstücks 20 durch das Werkzeug 10 eine Nut 21 gefräst. Dazu fährt das Werkzeug 10 entlang unterschiedlicher Bewegungsrichtungen 26 einen zusammenhängenden Bearbeitungspfad 27 ab. Sowohl zur Bewegung des Werkzeugs 10 entlang des Bearbeitungspfades 27 und zur Drehung des Werkzeugs 10 ist die Produktionsmaschine 50 mit nicht näher dargestellten Antriebsmitteln 54 versehen. An einer Ecke des Werkstücks 20 befindet sich ein Werkzeugbezugspunkt 24, der als Ursprung für drei Werkstückachsen 25 dient. Der Bearbeitungspfad 27, der sich aus einzelnen Bewegungen entlang der Bewegungsrichtungen 26 zusammensetzt, ist in der nicht näher dargestellten Steuereinheit 56 der Produktionsmaschine 50 in Bezug auf den Werkstückbezugspunkt 24 und die Werkstückachsen 25 gespeichert und definiert. Die Werkstückachsen 25 gemäß FIG 1 sind parallel zu den Maschinenachsen 53 ausgerichtet, die ihren Ursprung im Maschinenbezugspunkt 52 haben. Zwischen dem Maschinenbezugspunkt 52 und dem Werkstückbezugspunkt 24 liegt ein translatorischer Versatz 32 vor, der eine starre Transformation 30 vom Maschinen-Koordinatensystem 57 im Werkstück-Koordinatensystem 28 bildet. Bei der Werkstückbearbeitung gemäß FIG 1 werden vom Werkzeug 10 nur solche Abschnitte des Bearbeitungspfades 27 abgefahren, die jeweils nur eine Bewegungsrichtung 26 aufweisen, die im Wesentlichen mit einer Arbeitsrichtung eines nicht näher dargestellten Antriebsmittels 54 korrespondieren. Bei der Werkstückbearbeitung in FIG 1 ist somit zu keinem Zeitpunkt mehr als ein Antriebsmittel gleichzeitig in Betrieb.

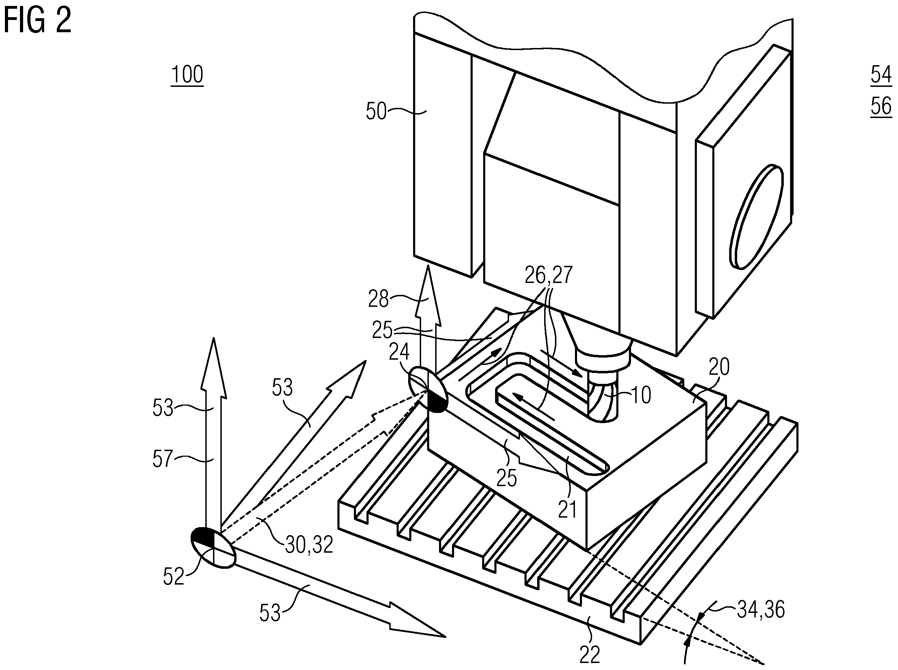

FIG 2 zeigt eine spanende Bearbeitung des Werkstücks 20 mit einem Werkzeug 10 einer Produktionsmaschine 50, bei der das Werkstück 20 mittels des erfindungsgemäßen Verfahrens 100 ausgerichtet ist. Das Werkstück 20 ist auf einem Werkstücktisch 22 positioniert und weist an einer Ecke einen Werkstückbezugspunkt 24 auf, der als Ursprung für mehrere Werkstückachsen 25 dient. Der Werkstückbezugspunkt 24 und die Werkstückachsen 25 bilden zusammen das Werkzeug-Koordinatensystem, auf das der vom Werkzeug 10 abgefahrene Bearbeitungspfad 27 bezogen definiert ist. Der Bearbeitungspfad 27 setzt sich aus Abschnitten zusammen, deren jeweilige Bewegungsrichtung 26 parallel zu einer der Werkstückachsen 25 ist. Dadurch wird bezogen auf das Werkstück 20 die gleiche Nut 21 hergestellt wie in FIG 1.

FIG 2 zeigt den Maschinenbezugspunkt 52, der als Ursprung für die Maschinenachsen 53 dient. Die Maschinenachsen 53 und der Maschinenbezugspunkt 52 bilden zusammen das Maschinen-Koordinatensystem. Der Werkstückbezugspunkt 24 ist vom Maschinenbezugspunkt 52 um einen translatorischen Versatz 32 beabstandet, der ein Parameter einer starren Transformation 30 ist, durch die Bewegungen im Maschinen-Koordinatensystem 57 und im Werkstück-Koordinatensystem 28 ineinander umrechenbar sind. Die starre Transformation 30 umfasst ferner einen Ausrichtungswinkel 34, der zwischen einer der Maschinen-Achsen 53 und einer der Werkstückachsen 25 liegt. Das Werkstück 20 ist somit auf dem Werkstücktisch 22 um den Ausrichtungswinkel 34 gedreht. Bei einer Bewegung des Werkzeugs 10 entlang eines Abschnitts des Bearbeitungspfades 27 erfolgt eine Bewegung des Werkzeugs 10 entlang von zwei Maschinenachsen 53. Mit jeder der Maschinenachsen 53 korrespondiert eine Betätigungsrichtung eines Antriebsmittels 54. Die einzelnen Abschnitte des Bearbeitungspfades 27 liegen bezogen auf das Maschinen-Koordinatensystem 57 im Wesentlichen diagonal. Bei den Bewegungen entlang der einzelnen Abschnitte des Bearbeitungspfades 27 überlagern sich somit die von den Antriebsmitteln 54 erzeugten Bearbeitungskräfte auf das Werkstück 20. Dadurch überlagern sich die Achsdynamiken, also Geschwindigkeit, Beschleunigung und Ruck, so dass sich schnellere Bahnbewegungen bezogen auf das Werkstück 20 ergeben.

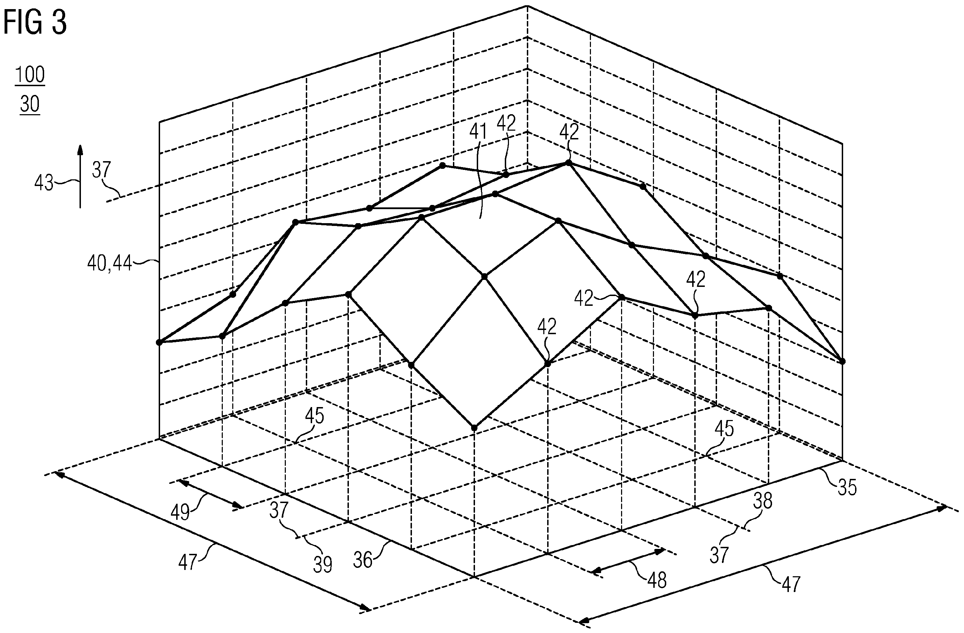

In FIG 3 ist ein Diagramm einer Prozessgrößenauswertung einer zweiten Ausführungsform des erfindungsgemäßen Verfahrens 100 abgebildet. Das Diagramm umfasst eine erste Parameter-Achse 38, auf der ein erster Parameter 35 einer starren Transformation 30 bezogen auf eine Null-Linie 37 aufgetragen ist. Das Diagramm umfasst auch eine zweite Parameter-Achse 39, auf der ein zweiter Parameter 36 der starren Transformation 30 bezogen auf eine Null-Linie 37 aufgetragen ist. Die Parameter-Achsen 38, 39 spannen eine Ebene auf, in der die zugehörigen Parameter 35, 36 jeweils innerhalb einer Variationsbreite 47 modifiziert werden. Die Modifikation der Parameter 35, 36 erfolgt dabei in separaten Schrittweiten 48, 49.

Ein Schnittpunkt 45 von zwei Werten der Parameter 35, 36 in der von den Parameter-Achsen 38, 39 aufgespannten Ebene korrespondiert mit einer starren Transformation 30, für die im erfindungsgemäßen Verfahren 100 der nicht näher dargestellte werkstückfeste Bearbeitungspfad 27 unter Berücksichtigung der jeweiligen starren Transformation 30 simuliert wird. Zu jedem Schnittpunkt 45 wird entlang einer Prozessgrößen-Achse 44 die Prozessgröße 40 aufgetragen, die durch die zugehörige Simulation ermittelt wird. Die Prozessgrößen-Achse 44 weist auch eine Null-Linie 37 auf. Mit jedem der Schnittpunkte 45 in der von den Parameter-Achsen 38, 39 aufgespannten Ebene korrespondiert eine Stützstelle 42. Die Mehrzahl an Stützstellen 42 definiert eine segmentierte Resultatfläche 41, anhand der im erfindungsgemäßen Verfahren 100 die starre Transformation 30 ermittelt wird, bei dem die Prozessgröße 40 den wählbaren Zielwert 43 erreicht. Gemäß FIG 3 ist der gewählte Zielwert 43 ein Maximum der Prozessgröße 40.

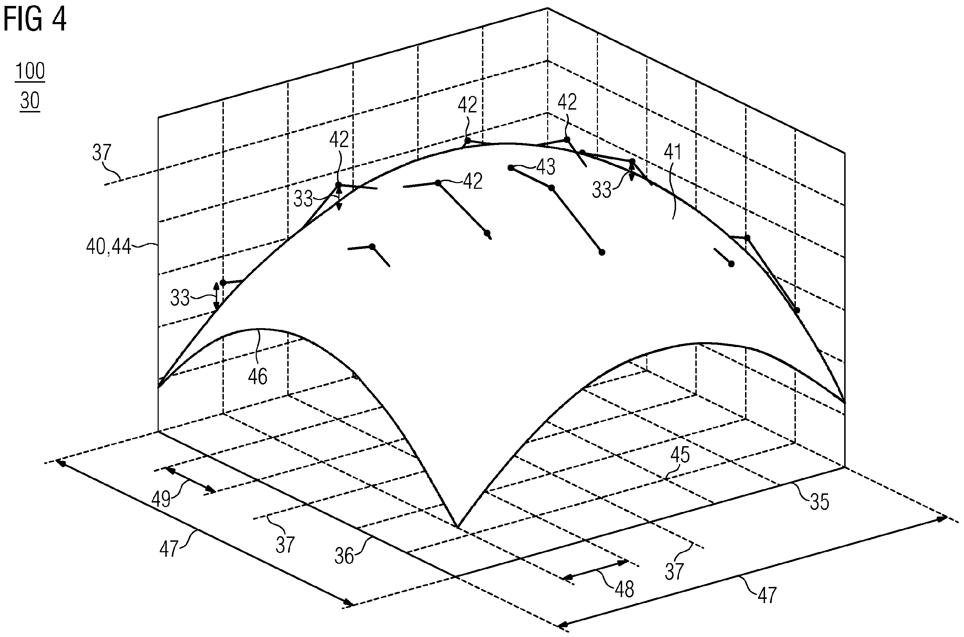

FIG 4 zeigt schematisch ein Diagramm einer dritten Ausführungsform des erfindungsgemäßen Verfahrens 100. Das Diagramm umfasst eine erste Parameter-Achse 38, auf der ein erster Parameter 35 einer starren Transformation 30 bezogen auf eine Null-Linie 37 aufgetragen ist. Das Diagramm umfasst auch eine zweite Parameter-Achse 39, auf der ein zweiter Parameter 36 der starren Transformation 30 bezogen auf eine Null-Linie 37 aufgetragen ist. Die Parameter-Achsen 38, 39 spannen eine Ebene auf, in der die zugehörigen Parameter 35, 36 jeweils innerhalb einer Variationsbreite 47 modifiziert werden. Die Modifikation der Parameter 35, 36 erfolgt dabei in separaten Schrittweiten 48, 49. Ein Schnittpunkt 45 von zwei Werten der Parameter 35, 36 in der von den Parameter-Achsen 38, 39 aufgespannten Ebene korrespondiert mit einer starren Transformation 30, für die im erfindungsgemäßen Verfahren 100 der nicht näher dargestellte werkstückfeste Bearbeitungspfad 27 unter Berücksichtigung der jeweiligen starren Transformation 30 simuliert wird. Zu jedem Schnittpunkt 45 wird entlang einer Prozessgrößen-Achse 44 die Prozessgröße 40 aufgetragen, die durch die zugehörige Simulation ermittelt wird. Die Prozessgrößen-Achse 44 weist auch eine Null-Linie 37 auf. Mit jedem der Schnittpunkte 45 in der von den Parameter-Achsen 38, 39 aufgespannten Ebene korrespondiert eine Stützstelle 42.

Die Stützstellen 43 dienen als Daten zur Erstellung eines Least-Square-Polynoms, mit dem die stetige Resultatfläche 31 ermittelt wird. Bei der Ermittlung der stetigen Resultatfläche 41 können die Stützstellen 42 auch mit einer Toleranz 33 entlang der Prozessgrößen-Achse 44 außerhalb der Resultatfläche 41 liegen. Auf der stetigen Resultatfläche 31 kann ein angestrebtes Maximum oder Minimum auch in einem Bereich zwischen den Stützstellen 43 in einfacher Weise ermittelt werden.

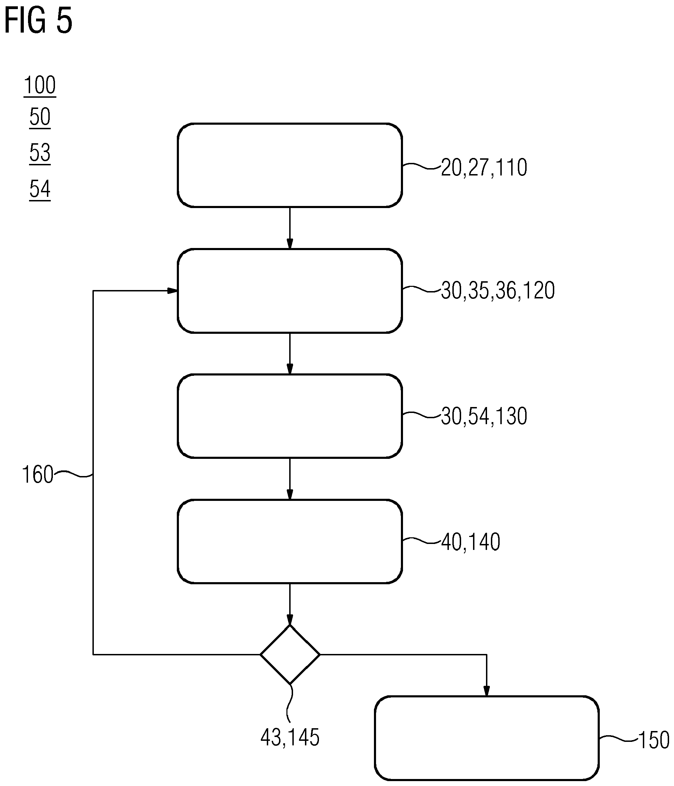

In FIG 5 ist ein Ablaufschema 5 einer vierten Ausführungsform des erfindungsgemäßen Verfahrens 100 abgebildet. Darin wird in einem ersten Verfahrensschritt 110 ein nicht näher dargestellter werkstückfester Bearbeitungspfad 27 des Werkstücks 20 bereitgestellt, das spanend zu bearbeiten ist. Darauf folgt ein Selektionsschritt 120, in dem eine starre Transformation 30 der Positionierung des Werkstücks 20 ausgewählt wird. Die starre Transformation 30 beschreibt dabei, in welcher Lage und Orientierung das Werkstück 20 in der nicht näher dargestellten Produktionsmaschine 50 bei der spanenden Bearbeitung einzuspannen ist. Daran schließt sich ein Simulationsschritt 130 an, in dem der werkstückfeste Bearbeitungspfad 27 in einer Simulation unter Berücksichtigung der im vorherigen Verfahrensschritt 120 gewählten starren Transformation 30 abgefahren wird. Im Rahmen der Simulation wird ermittelt, mit welchem mindestens einen Steuerungsbefehl an mindestens ein Antriebsmittel 54 der Produktionsmaschine 50 der werkstückfeste Bearbeitungspfad 27 abgefahren wird, wenn das Werkstück 20 gemäß der starren Transformation 30 eingespannt ist.

In einem darauffolgenden Evaluationsschritt 140 wird mindestens eine Prozessgröße 40 ermittelt, die sich aus der gewählten spanenden Bearbeitung des Werkstücks 20 ergibt. Die Prozessgröße 40 kann dabei beispielsweise ein Verhältnis von Betriebsdauern von Antriebsmitteln 54 an unterschiedlichen Maschinenachsen 53 der Produktionsmaschine 50 sein. Daran schließt sich ein Prüfschritt 145 an, in dem geprüft wird, ob die im vorangegangenen Evaluationsschritt 140 ermittelte mindestens Prozessgröße 40 einen gewählten Zielwert 43 erreicht. Der Zielwert 43 ist dabei ein Maximum, ein Minimum, oder ein wählbarer Wert. Wenn der angestrebte Zielwert 43 erreicht ist, wird die korrespondierende starre Transformation 30 einem Benutzer als Ergebnis des erfindungsgemäßen Verfahrens 100 beim Verfahrensende 150 ausgegeben. Ist der Zielwert 43 nicht erreicht, erfolgt eine Rückführung 160 des erfindungsgemäßen Verfahrens 100 zum Selektionsschritt 120 und ein neuer Durchgang des Verfahrens 100. Beim erneuten Durchgang wird im Selektionsschritt 120 eine andere starre Transformation 30 gewählt als beim vorherigen Durchgang. Die starre Transformation 30 wird für den neuen Durchgang modifiziert, indem mindestens ein Parameter 35, 36 der starren Transformation 30 geändert wird.

## Patentansprüche

1. Verfahren (100) zur Ausrichtung eines spanend zu bearbeitenden Werkstücks (20), umfassend die Schritte:
a) Bereitstellen eines werkstückfesten Bearbeitungspfades (27) zur Bearbeitung des Werkstücks (20);
b) Auswählen einer starren Transformation (30) der Positionierung des Werkstücks (20);
c) Simulieren des werkstückfesten Bearbeitungspfades (27) unter Berücksichtigung der starren Transformation (30) der Positionierung des Werkstücks (20);
d) Ermitteln mindestens einer Prozessgröße (40) der spanenden Bearbeitung des Werkstücks (20);
**dadurch gekennzeichnet, dass** die Schritte b) bis d) unter Modifizieren der mindestens einen starren Transformation (30) der Positionierung des Werkstücks (20) wiederholt werden bis die mindestens eine Prozessgröße (40) einen Zielwert (43) erreicht, wobei die mindestens eine Prozessgröße (40) ein Verhältnis von Betriebsdauern von jeweils einem Antriebsmittel (54) von mindestens zwei Maschinenachsen (53) ist, und der Zielwert (43) ein wählbarer Wert ist.

2. Verfahren (100) nach Anspruch 1, **dadurch gekennzeichnet, dass** die mindestens eine starre Transformation (30) als Parameter (32, 34, 35, 36) einen translatorischen Versatz (32) und/oder einen Ausrichtungswinkel (34) des Werkstücks (20) umfasst.

3. Verfahren (100) nach Anspruch 1 oder 2, **dadurch gekennzeichnet, dass** das Verhältnis der Betriebsdauern der Antriebsmittel (54) der mindestens zwei Maschinenachsen (53) im Wesentlichen gleich Eins ist.

4. Verfahren (100) nach einem der Ansprüche 1 bis 3, **dadurch gekennzeichnet, dass** die Schritte a) bis d) für mindestens einen wählbaren Parameter (32, 34, 35, 36) der starren Transformation (30) bis mindestens dreimal iterativ durchgeführt werden.

5. Verfahren (100) nach einem der Ansprüche 1 bis 4, **dadurch gekennzeichnet, dass** der Zielwert (43) ein Resultat einer Nichtlinearen Optimierung, eines Newton-Verfahrens oder ein Optimum eines Least-Square-Polynoms ist.

6. Verfahren (100) nach Anspruch 5, **dadurch gekennzeichnet, dass** die in Schritt d) ermittelte Prozessgröße (40) die Stützstellen (43) für die Nichtlineare Optimierung, das Newton-Verfahren oder des Least-Square-Polynoms sind.

7. Verfahren (100) nach einem der Ansprüche 1 bis 6, **dadurch gekennzeichnet, dass** in einem ersten Durchlauf ein erster Parameter (35) der starren Transformation (30) modifiziert wird und, wenn der Zielwert (43) nicht erreicht wird, in einem zweiten Durchlauf ein zweiter Parameter (36) der starren Transformation (30) modifiziert wird.

8. Verfahren (100) nach einem der Ansprüche 2 bis 5, **dadurch gekennzeichnet, dass** Schritt c) unter Berücksichtigung mindestens einer Randbedingung der Produktionsmaschine (50) erfolgt, insbesondere einer maximalen Verfahrlänge, einer maximalen Beschleunigung, eines maximalen Rucks, und/oder einer maximalen Schnittgeschwindigkeit des Werkzeugs (10) entlang der mindestens einen Maschinenachse (53).

9. Programm (80) zur Durchführung in einem Speicher einer Steuereinheit (56) einer Produktionsmaschine (50), das zum Ausgeben von Steuerbefehlen an Antriebsmittel (54) von Maschinenachsen (53) ausgebildet, **dadurch gekennzeichnet, dass** das Programm (80) dazu ausgebildet ist, mindestens eines der Verfahren (100) nach den Ansprüchen 1 bis 8 durchzuführen.

10. Steuereinheit (56) zum Steuern mindestens eines Antriebsmittels (54) einer Produktionsmaschine (50), die mit einem Speicher und einer Recheneinheit zur Speicherung und Ausführung eines Programms (80) nach Anspruch 9 ausgebildet ist.

11. Produktionsmaschine (50), umfassend ein Werkzeug (10), das durch jeweils mindestens ein Antriebsmittel (54) entlang mindestens zweier Maschinenachsen (53) bewegbar ist, und eine Steuereinheit (56) mit einem Speicher, die zur Speicherung und Ausführung eines Programms (80) nach Anspruch 9 ausgebildet ist.

## Claims

1. Method (100) for the orientation of a workpiece (20) that is to be machined, comprising the steps:
a) providing a workpiece-fixed processing path (27) for processing the workpiece (20);
b) selecting a rigid transformation (30) of the positioning of the workpiece (20);
c) simulating the workpiece-fixed processing path (27) taking account of the rigid transformation (30) of the positioning of the workpiece (20);
d) determining at least one process variable (40) of the machining of the workpiece (20);
**characterised in that** the steps b) to d) are repeated, modifying the at least one rigid transformation (30) of the positioning of the workpiece (20), until the at least one process variable (40) reaches a target value (43), wherein the at least one process variable (40) is a ratio of running times of respective driving means (54) of at least two machine axes (53) and the target value (43) is a selectable value.

2. Method (100) according to claim 1, **characterised in that** the at least one rigid transformation (30) comprises a translatory offset (32) and/or an orientation angle (34) of the workpiece (20) as parameters (32, 34, 35, 36).

3. Method (100) according to claim 1 or 2, **characterised in that** the ratio of the running times of the driving means (54) of the at least two machine axes (53) is essentially equal to one.

4. Method (100) according to one of claims 1 to 3, **characterised in that** the steps a) to d) are iteratively performed up to at least three times for at least one selectable parameter (32, 34, 35, 36) of the rigid transformation (30).

5. Method (100) according to one of claims 1 to 4, **characterised in that** the target value (43) is a result of a non-linear optimisation, of a Newton method, or is an optimum of a least-square polynomial.

6. Method (100) according to claim 5, **characterised in that** the process variables (40) determined in step d) are the interpolation nodes (43) for the non-linear optimisation, the Newton method or the least-square polynomial.

7. Method (100) according to one of claims 1 to 6, **characterised in that** a first parameter (35) of the rigid transformation (30) is modified in a first run and if the target value (43) is not reached a second parameter (36) of the rigid transformation (30) is modified in a second run.

8. Method (100) according to one of claims 2 to 5, **characterised in that** step c) is performed taking account of at least one boundary condition of the production machine (50), in particular a maximum length of travel, a maximum acceleration, a maximum jolt, and/or a maximum cutting speed of the tool (10) along the at least one machine axis (53).

9. Program (80) which runs in a memory of a control unit (56) of a production machine (50) and is designed to output control instructions to driving means (54) of machine axes (53), **characterised in that** said program (80) is designed to perform at least one of the methods (100) according to claims 1 to 8.

10. Control unit (56) for controlling at least one driving means (54) of a production machine (50), comprising a memory and an arithmetic unit for storing and executing a program (80) according to claim 9.

11. Production machine (50) which comprises a tool (10) that can be moved in each case by at least one driving means (54) along at least two machine axes (53), and a control unit (56) having a memory which is designed to store and execute a program (80) according to claim 9.

## Revendications

1. Procédé (100) d'alignement d'une pièce (20) à usiner avec enlèvement de copeaux, comprenant les stades dans lesquels :
a) on dispose d'un trajet (27) d'usinage fixe par rapport à la pièce pour usiner la pièce (20) ;
b) on choisit une transformation (30) rigide du positionnement de la pièce (20) ;
c) on simule le trajet (27) d'usinage fixe par rapport à la pièce en tenant compte de la transformation (30) rigide du positionnement de la pièce (20) ;
d) on détermine au moins une grandeur (40) de processus de l'usinage avec enlèvement de copeaux de la pièce (20) ;
**caractérisé en ce que** l'on répète les stades b) à d) en modifiant la au moins une transformation (30) rigide du positionnement de la pièce (20) jusqu'à ce que la au moins une grandeur (40) de processus atteigne une valeur (43) cible, la au moins une grandeur (40) de processus étant un rapport de durées de fonctionnement de, respectivement, un moyen (54) d'entraînement d'au moins deux axes (53) de machine, et la valeur (43) cible étant une valeur pouvant être choisie.

2. Procédé (100) suivant la revendication 1, **caractérisé en ce que** la au moins une transformation (30) rigide comprend, comme paramètres (32, 34, 35, 36) un déplacement (32) en translation et/ou un angle (34) d'alignement de la pièce (20).

3. Procédé (100) suivant la revendication 1 ou 2, **caractérisé en ce que** le rapport des durées de fonctionnement des moyens (54) d'entraînement des au moins deux axes (53) de machine est sensiblement égal à un.

4. Procédé (100) suivant l'une des revendications 1 à 3, **caractérisé en ce que** l'on effectue, itérativement jusqu'à au moins trois fois, les stades a) à d) pour au moins un paramètre (32, 34, 35, 36) pouvant être choisi de la transformation (30) rigide.

5. Procédé (100) suivant l'une des revendications 1 à 4, **caractérisé en ce que** la valeur (43) cible est le résultat d'une optimisation non linéaire, d'un procédé de Newton ou d'un optimum d'un polynôme des moindres carrés.

6. Procédé (100) suivant la revendication 5, **caractérisé en ce que** les grandeurs (40) de processus déterminées au stade d) sont les points (43) de base de l'optimisation non linéaire du procédé de Newton ou du polynôme des moindres carrés.

7. Procédé (100) suivant l'une des revendications 1 à 6, **caractérisé en ce que**, dans un premier passage, on modifie un premier paramètre (35) de la transformation (30) rigide et, si la valeur (43) cible n'est pas atteinte, dans un deuxième passage, on modifie un deuxième paramètre (36) de la transformation (30) rigide.

8. Procédé (100) suivant l'une des revendications 2 à 5, **caractérisé en ce que** l'on effectue le stade c) en tenant compte d'au moins une condition aux limites de la machine (50) de production, notamment d'une longueur maximum de déplacement, d'une accélération maximum, d'une secousse maximum et/ou d'une vitesse de coupe maximum de l'outil (10) suivant le au moins un axe (53) de la machine.

9. Programme (80) à effectuer dans une mémoire d'une unité (56) de commande d'une machine (50) de production, qui est constitué pour émettre des instructions de commande à des moyens (54) d'entraînement d'axes (53) de la machine, **caractérisé en ce que** le programme (80) est constitué pour effectuer au moins l'un des procédés (100) suivant les revendications 1 à 8.

10. Unité (56) de commande pour commander au moins un moyen (54) d'entraînement d'une machine (50) de production, qui est constituée en ayant une mémoire et une unité de calcul pour la mise en mémoire et l'exécution d'un programme (80) suivant la revendication 9.

11. Machine (50) de production comprenant un outil (10), qui peut être déplacée le long d'au moins deux axes (53) de la machine par, respectivement, au moins un moyen (54) d'entraînement, et une unité (56) de commande ayant une mémoire, qui est constituée pour mettre en mémoire et exécuter un programme (80) suivant la revendication 9.
